(19) Europäisches Patentamt
European Patent Office
Office européen des brevets

(11) Publication number: **0 137 525**
**B1**

(12) # EUROPEAN PATENT SPECIFICATION

(45) Date of publication of patent specification: **02.12.87**

(51) Int. Cl.$^4$: **G 06 F 7/52**

(21) Application number: **84200987.0**

(22) Date of filing: **23.04.82**

(60) Publication number of the earlier application in accordance with Art. 76 EPC: **0 064 826**

(54) **Arithmetic unit in data processing system with bit-extension circuitry.**

(30) Priority: **23.04.81 US 256726**
**23.04.81 US 256923**
**23.04.81 US 256772**

(43) Date of publication of application:
**17.04.85 Bulletin 85/16**

(45) Publication of the grant of the patent:
**02.12.87 Bulletin 87/49**

(84) Designated Contracting States:
**AT BE CH DE FR GB IT LI LU NL SE**

(56) *References cited:*

**COMPUTER DESIGN, vol. 18, no. 6, June 1979, pages 105-112, Concord, US; F.G. GERBERICH et al.: "Multiplier/divider hardware design accelerates microprocessor throughput"**

**IBM TECHNICAL DISCLOSURE BULLETIN, Vol.7, No.8, Jan.1965, pages 664-665**

(73) Proprietor: **DATA GENERAL CORPORATION**
**Route 9**
**Westboro Massachusetts 01581 (US)**

(72) Inventor: **Rosen, Josh**
**9A Lincoln Street**
**Westboro Massachusetts 01581 (US)**
Inventor: **Blau, Jonathan S.**
**143 Butternut Hollow**
**Nagog Woods Massachusetts 01718 (US)**

(74) Representative: **Pears, David Ashley et al**
**REDDIE & GROSE 16 Theobalds Road**
**London WC1X 8PL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates generally to data processing systems which utilize fixed and floating-point arithmetic units and, more particularly, to an improved technique for providing arithmetic words extension logic for use in performing multiplication and division operations.

The representation of numbers in data processing systems, particularly non-integer numbers, requires the introduction of a radix point into the notation. For example, data processing systems may employ "fixed point notation" wherein the radix point is placed immediately to the right of the least significant bit or placed immediately to the right of the sign bit before the first information bit.

A further option is often referred to as "floating point notation" in which the numbers are represented by a sign, an exponent, and a mantissa. Such technique is described in many texts, one example being "Computer Architecture", Caxton C. Foster, Van Nostrand Reinhold Co, New York 1976, pages 16 et seq.

Calculations upon the mantissa may be performed by operating on groups of bits (i.e. "bit slices") of the mantissa words involved, the computation for each bit slice producing a "carry" bit to be added to the adjacent bit slice until the calculation is completed for the entire word. For example, overall mantissa words having 32 bits may use eight 4-bit slice logic units in such calculations

If each bit slice is permitted to produce its "carry" bit only after the operation for such bit slice has occurred and the carry bit is then added to the next bit slice, the overall calculation time is considerably longer than desired. In order to reduce the overall calculation time, techniques for effectively computing the carry bits ahead of time, i.e. so-called "look ahead" carry bit techniqes have been devised wherein the various carry bits are computed in parallel and simultaneously with the bit slice computation operations. Such techniques have been used for many years and are well known to those in art.

In a multiply or divide operation, conventional algorithms which are used for such operations require that certain operands be extended, i.e. that additional bits be added to the operand words. For example, in a particular multiply algorithm such operands must be extended by two bits, while in a particular divide algorithm such operands must be extended by one bit. Extension techniques which require the use of extra bit slice logic units add to the hardware complexity of the arithmetic units or floating point units. It is desirable to device less cumbersome extension techniques for such purposes to avoid such hardware complexity.

The invention, as defined in claim 1 below, makes use of simplified arithmetic unit extension logic, using less complex programmable array logic and addition stages to provide a simpler technique for operand extensions during multiply and divide operations.

The invention will be described in more detail, by way of example, with reference to the accompanying drawings, in which:

Fig. 1 shows a block diagram of an arithmetic unit for performing arithmetic calculations;

Fig. 2 shows specific 4-bit microprocessor slice logic units used in exponent calculations; and

Fig. 3 shows logic units used to provide extension bits for use in multiply or divide operations in accordance with the invention.

The invention disclosed herein can be best described in the context of a particular data processing system, such as that disclosed in EP 0 039 227. A broad block diagram of the arithmetic logic unit (ALU) used therein is shown in Fig. 154 of the application which is reproduced herein in Fig. 1. Specific logic diagrams required to understand the invention described herein are shown here in Figs. 2 and 3. In such system, as is conventional for 32-bit mantissa calculations, the computation is made in four-bit slices by eight microprocessor four-bit slice logic units (not shown). Two 4-bit values are operated on, and a 1-bit carry value is added to the result of this operation to produce the 4-bit output (DS-outputs). Thus the slice units produce an unrounded floating point result formed as the following 4-bit slices shown below:

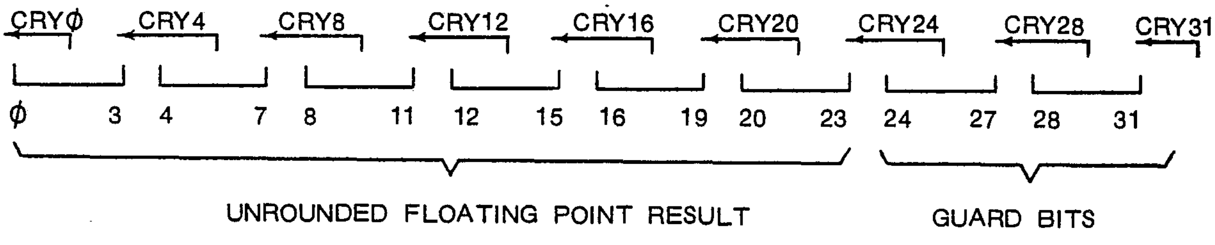


As can be seen in the above diagram, in the 32-bit calculated word the 24 bits forming the six more significant 4-bit slices (bits Ø—23) produce the unrounded floating point result, while the eight bits forming the two less significant 4-bit groups (bits 24—31) represent the bits which are used to determine the "round" bit, referred to as the "guard" bits. In each instance, each of the 4-bit slices effectively produces a carry (CRY) bit which is supplied to the next adjacent 4-bit slice, e.g. bit slice Ø—3 is effectively supplied with the carry bit CRY4 from the 4-bit slice 4—7, the latter slice is supplied with CRY8 from 4-bit slice 8—11, and so on. The CRY 31 bit is supplied from microcode, while the CRYØ bit is the carry bit for the final overall floating point result. In order to save time in the computation the carry bits are actually generated in parallel

with the 4-bit computations in each of the 4-bit microprocessor slice logic units, the parallel carry bit calculations being performed in look ahead carry generator units. Thus, during such arithmetic operation cycle, the overall computation, is performed substantially simultaneously to form the unrounded 32-bit result.

The exponent calculation is performed in two 4-bit slices as shown in Fig. 2 by 4-bit microprocessor slice logic units 20A and 20B. AEXP is addressed from the A register (AREGØA—3A) while the externally sourced exponent DEXP is supplied as bits XDØ—XD7. During this calculation bits EXPØ—7 hold the AEXP value. BEXP is then calculated and supplied to the register addressed by the B register (BREGØA—3A).

In order to achieve full precision in the results obtained from multiplication and division operations of an arithmetic logic unit or a floating point computation unit, the use of a conventional multiplication algorithm (known as a "two-bit Booth's algorithm") requires that the multiplicand and partial product operands be extended by two additional bits (e.g., when using 32-bit or 64-bit words such operands must be extended to 34 bits and 66 bits, respectively) and the use of a conventional division algorithm (known as a "non-restoring divide" algorithm) requires extension of the divident and divisor operands by one additional bit (e.g when 33 bits or 65 bits, respectively). It is desirable to provide a technique for extending the words involved which does not require adding an extra 4-bit microprocessor slice logic unit.

A technique for providing the desired arithmetic extensions is shown in Fig. 3 which depicts a programmable array logic unit 26 and a simple 4-bit adder unit 27. The following analyses assist in explaining the operation of units 26 and 27 for a multiply or division operation.

In the system design described herein, the multiply operation provides a result by adding a value A to the product of two values B and C, i.e. the multiply result is A+(BXC). A multiply operation may be signed or unsigned. In accordance with the conventional multiply algorithm, a signed multiply operation requires both a first operand (the partial product) and a second operand (either a Ø, the mutiplicand, or twice the multiplicand) to be sign extended. An unsigned multiply operation requires the first operand to be sign extended (except in the first multiplication cycle) and requires the second operand to be zero extended. The chart set forth below depicts the two extended bits for both the first and second operands for the various multiply operations.

SIGNED MULTIPLY

| OPERAND | ADD | | SUBTRACT | | |
|---|---|---|---|---|---|
| 1st | Do | Do | Do | Do | |
| 2nd | +Ø | Ø | +1 | 1 | ±Ø |
| 1st | Do | Do | Do | Do | |
| 2nd | $+Q_B$ | $Q_B$ | $+\overline{Q}_B$ | $\overline{Q}_B$ | ± MULTIPLICAND |
| 1st | Do | Do | Do | Do | |
| 2nd | $+Q_B$ | $Q_B$ | $+\overline{Q}$ | $\overline{Q}_B$ | ± 2X MULTIPLICAND |

UNSIGNED MULTIPLY

| OPERAND | ADD | | SUBTRACT | | |
|---|---|---|---|---|---|
| 1st | Do | Do | Do | Do | |
| 2nd | +Ø | Ø | +1 | 1 | ±Ø |
| 1st | Do | Do | Do | Do | |
| 2nd | +Ø | Ø | +1 | 1 | ± MULTIPLICAND |
| 1st | Do | Do | Do | Do | |
| 2nd | +Ø | $Q_B$ | +1 | $\overline{Q}_B$ | × 2X MULTIPLICAND |

In the above chart Do represents the most significant bit of the first operand and $Q_B$ represents the most significant bit of the second operand.

In the special case of an unsigned multiply during the first multiply cycle (when the partial product is the value A) the first operand (partial product) is zero extended as follows:

UNSIGNED MULTIPLY (DURING FIRST CYCLE)

| OPERAND | ADD | | SUBTRACT | | |
|---|---|---|---|---|---|
| 1st | Ø | Ø | Ø | Ø | |
| 2nd | +O | Ø | +1 | 1 | +Ø |
| 1st | Ø | Ø | Ø | Ø | |
| 2nd | +Ø | Ø | +1 | 1 | ± MULTIPLICAND |
| 1st | Ø | Ø | Ø | Ø | |
| 2nd | +Ø | $Q_B$ | +1 | $\overline{Q_B}$ | ± 2X MULTIPLICAND |

The signal DØ contains the value of Do and QBit contains the value of $Q_B$ in the above chart.

The programmable array logic 26 handles the generation of the above values for the first and second operands as shown in Fig. 3. IRIØ and IRI1 bits identify the cases set forth below, the IROP4 signifies an "add" or "subtract" operation during the multiply, the UNSIGN bit signifies a signed or an unsigned multiply operation and the MACC CN bit signifies operation either in the first multiply cycle or in a cycle other than the first multiply cycle, as set forth below. The signal MPY is "true" during multiply cycles.

| BITS | | SIGNIFY |
|---|---|---|
| IRI1 | IRIØ | |
| Ø | Ø | +Ø |
| Ø | 1 | ± MULTIPLICAND |
| 1 | Ø | ± 2X MULTIPLICAND |
| 1 | 1 | ±Ø (REDUNDANT) |

| IROP4 | |
|---|---|
| Ø | ADD |
| 1 | SUBTRACT |

| UNSIGN | |
|---|---|
| Ø | SIGN |
| 1 | UNSIGNED |

| $\overline{\text{MACC CN}}$ | |
|---|---|
| Ø | FIRST MULTIPLY CIRCLE |
| 1 | NOT FIRST MULTIPLY CYCLE |

wherein in each case Ø≡ Low and 1 ≡ High.

Bits IRI1, IRIØ, IRØP4 are generated in accordance with the particular multiply algorithm which is used, utilizing known logic techniques, and bits MPY, UNSIGN and $\overline{\text{MACC CN}}$ are obtained from microcode control, in accordance with well known techniques.

Thus, input bits to programmable array logic 26 as specified above provide the two operand extension bits at the A-inputs (first operand) and the B-inputs (second operand) of adder unit 27. The resulting addition produces the extension bits DSTX and DSTY for the next partial product as shown in Fig. 3. The required CRYØ bit is also input to adder unit 27 as mentioned above. In the PAL unit 26 the $\overline{LDQB}$, TCRYØ and QBIN are used for purposes other than in the multiply or divide operations and need not be discussed further.

With reference to division operations, in accordance with the aforementioned conventional divide algorithms, the first operand is the dividend and the second operand is the divisor. In an unsigned divide operation, during each divide cycle the first operand is always extended by the most significant bit of the result from the last divide cycle (identified as the LINK bit, as shown in Fig. 3) while the second operand is always zero extended, as follows:

UNSIGNED DIVISION

| | ADD | SUBTRACT |
|---|---|---|
| 1st OPERAND | LINK | LINK |
| 2nd OPERAND | +Ø | +1 |

The CRYY bit signifies whether an "add" or "subtract" is required, as follows:

| TCRYY | SIGNIFIES |
|---|---|
| Ø | ADD |
| 1 | SUBTRACT |

The carry bit (CRYY) from adder unit 27 resulting from the above additions of the LINK bit and the ±Ø bit is the quotient bit and such bit is registered for the next divide cycle, the registered value being designed the TCRYY bit. The PAL unit 27 and adder 27, thus, determine the carry bit required for the divide operation from the extended bits of the divided (first operand) and the divisor (second operand). The signal DIVD is "true" during divide cycles as set by microcode.

Accordingly, the use of PAL unit 27 and adder unit 27 provides for the extension requirements in both a multiply and a divide operation without requiring the use of an additional 4-bit microprocessor slice logic unit of the type depicted in Fig. 2.

**Claims**

1. A data processing system having an arithmetic unit (200) for performing multiplication or division operations requiring a plurality of computation cycles, each of which cycles requires the result thereof to be extended by a selected number of bits, characterised in that said arithmetic unit (200) comprises programmable array logic means (26) responsive to select bits identifying selected characteristics of the computation being performed for providing operand extension bits; and further logic means (27) responsive to said operand extension bits for providing said selected number of extension bits (DSTX, DSTY) for extending the computation result during the current computation cycle.

2. A data processing system according to claim 1, characterised in that for performing multiplication operations, said programmable array logic means (26) is responsive to two selected bits ($D_O$, $Q_B$) each representing the most significant bit of a corresponding operand, to a selected bit (UNSIGN) identifying whether the current cycle is to be a sign extended or a zero extended operation, to a selected bit (MACC CN) identifying whether the current multiply cycle is the first multiply cycle or other than the first multiply cycle, to a selected bit (IROP4) identifying whether the current cycle requires an addition or a subtraction operation, and to a selected pair of bits (IRI0, 1) identifying the form of said multiplicand operand during said current cycle.

3. A data processing system in accordance with claim 2, characterised in that said further logic means (27) produces a pair of extension bits (DSTX, DSTY).

4. A data processing system in accordance with claim 2 or 3, characterised in that said multiply operation utilizes 32-bit operands for producing a partial product result during each multiply cycle, said further logic means producing two extension bits to provide a 34-bit result.

5. A data processing system in accordance with claim 4, characterised in that said multiplicand can be in the following forms: ±Ø, ± the multiplicand, or ± twice the multiplicand.

6. A data processing system in accordance with claim 2 or 3, characterized in that said multiply operation utilizes 64-bit operands for producing a partial product result during each multiply cycle, said further logic means producing two extension bits to provide a 66-bit result.

7. A data processing system according to claim 1, characterised in that for performing divide operations, said programmable array logic is responsive in a current divide computation cycle to a first selected bit (LINK) of the result of the previous divide computation cycle and to a second selected bit (TCRYY) identifying whether an add or subtract operation is required for the current divide cycle for producing the extension bits, and in that the further logic means is responsive to said extension bits for providing a quotient bit (CRYY) during the current divide cycle.

8. A data processing system in accordance with claim 7, characterised in that said divide operation utilizes 32 bit operands for producing said quotient bit during each divide cycle.

9. A data processing system in accordance with claim 8, characterised in that said first selected bit (LINK) is the most significant bit of the result of the previous divide cycle.

10. A data processing system in accordance with claim 7, characterised in that said divide operation utilizes 64-bit operands for producing said quotient bit during each divide cycle.

**Patentansprüche**

1. Datenverarbeitungsanlage mit einer arithmetischen Einheit (200) zur Durchführung von Multiplikations- und Divisionsoperationen, die eine Vielzahl von Rechenzyklen erfordern, wobei es jeder Zyklus erforderlich macht, daß sein Ergebnis durch eine ausgewählte Zahl von Bits ausgebreitet wird, dadurch gekennzeichnet, daß die arithmetische Einheit (200) eine programmierbare logische Mehrfachanordnung (26), die auf ausgewählte Bits anspricht, die ausgewählte Eigenschaften der zur Bereitstellung von Operanden-Ausbreitungs- Bits durchgeführten Rechnung kennzeichnen, und weitere Logikmittel (27) aufweist, die auf die Operanden-Ausbreitungs-Bits ansprechen und die ausgewählte Zahl von Ausbreitungs- Bits (DSTX, DSTY) liefert, und das Rechenresultat während des laufenden Rechenzyklus auszubreiten.

2. Datenverarbeitungsanlage nach Anspruch 1, dadurch gekennzeichnet, daß zur Durchführung von Multiplikations-Operationen die programmierbare logisiche Mehrfachanordnung (26) anspricht auf zwei ausgewählte Bits ($D_O$, $Q_B$), die jeweils das höchstwertige Bit eines entsprechen Operanden darstellen, auf ein ausgewähltes Bit (UNSIGN), das anzeigt, ob der laufende Zyklus eine Operation mit Vorzeichenerweiterung oder eine Operation mit Nullerweiterung sein soll, auf ein ausgewähltes Bit (MACC CN), das anzeigt, ob der laufende Multiplikationszyklus der erste oder ein anderer als der erste Multiplikationszyklus ist, ferner auf einausgewähltes Bit (IROP4), das anzeigt, ob der laufende Zyklus eine Additions- oder Subtraktionsoperation erfordert, und auf ein ausgewähltes Paar von Bits (IRI0, 1), die die Form des Multiplikanden-Operanden während dieses laufenden Zyklus anzeigen.

3. Datenverarbeitungsanlage nach Anspruch 2, dadurch gekennzeichnet, daß die weiteren Logikmittel (27) ein Paar von Ausbreitungs-Bits (DSTX, DSTY) erzeugen.

4. Datenverarbeitungsanlage nach Anspruch 2 oder 3, dadurch gekennzeichnet, daß die Multiplikationsoperation 32-Bit-Operanden zur Erzeugung eines Teilproduktresultats während jedes Multiplikationszyklus benutzt und die weiteren Logikmittel (27) zwei Ausbreitungs-Bits erzeugen, um ein 34-Bit-Resultat zu liefern.

5. Datenverarbeitungsanlage nach Anspruch 4, dadurch gekennzeichnet, daß der Multiplikand in der folgenden Form vorliegen kann: ±0, ± der Multiplikand oder ± zweimal der Multiplikand.

6. Datenverarbeitungsanlage nach Anspruch 2 oder 3, dadurch gekennzeichnet, daß die Multiplikationsoperation 64-Bit- Operanden zur Erzeugung eines Teilproduktresultats während jedes Multiplikationszyklus benutzt und die weiteren Logikmittel (27) zwei Ausbreitungs-Bits erzeugen, um ein 66-Bit- Resultat zu liefern.

7. Datenverarbeitungsanlage nach Anspruch 1, dadurch gekennzeichnet, daß zur Durchführung von Divisions-Operationen die programmierbare logische Mehrfachanordung (26) in einem laufenden Divisionsrechenzyklus anspricht auf ein erstes ausgewähltes Bit (LINK) des Resultats des vorhergehenden Divisionsrechenzyklus und auf ein zweites ausgewähltes Bit (TCRYY), das anzeigt, ob eine Additions- oder Subtraktionsoperation für den laufenden Divisionszyklus zur Erzeugung der Ausbreitungs-Bits erforderlich ist, und daß die weiteren Logikmitterl auf diese Ausbreitungs-Bits ansprechen und während des laufenden Divisionszyklus ein Quotienten- Bit (CRYY) erzeugen.

8. Datenverarbeitungsanlage nach Anspruch 7, dadurch gekennzeichnet, daß die Divisionsoperation 32-Bit-Operanden zur Erzeugung des Quotienten-Bits während jedes Divisionszyklus benutzt.

9. Datenverarbeitungsanlage nach Anspruch 8, dadurch gekennzeichnet, daß das erste ausgewählte Bit (LINK) das höchstwertige Bit des Resultats des vorhergehenden Divisionszyklus ist.

10. Datenverarbeitungsanlage nach Anspruch 7, dadurch gekennzeichnet, daß die Divisionsoperation 64-Bit-Operanden zur Erzeugung des Quotienten-Bits während jedes Divisionszyklus benutzt.

**Revendications**

1. Système de traitement de données comprenant un module arithmétique (200) pour réaliser des opérations de multiplication ou de division nécessitant une pluralité de cycles de calcul, chacun de ces cycles nécessitant que son résultat soit étendu d'un nombre choisi de bits, caractérisé en ce que le module arithmétique (200) compend un moyen de réseau logique programmable (26) agissant en réponse à des

bits choisis identifiant des caractéristiques choisies du calcul en cours de réalisation pour fournir les bits d'extension d'opérande; et un autre moyen logique (27) agissant en réponse aux bits d'extension d'opérande pour fournir ledit nombre choisi de bits d'extension (DSTX, DSTY) pour étendre le résultat du calcul pendant le cycle de calcul en cours.

2. Système de traitement de données selon la revendication 1, caractérisé en ce que, pour réaliser les opérations de multiplication, le moyen de réseau logique programmable (26) agit en réponse à deux bits choisis ($D_O$, $Q_B$), représentant chacun le bit le plus significatif d'un opérande correspondant, à un bit choisi (UNSIGN) indiquant si le cycle en cours doit être une opération étendue en signe ou étendue par des zéros, à un bit choisi (MACC CN) identifiant si le cycle de multiplication en cours est le premier cycle de multiplication ou bien autre que le premier cycle de multiplication, à un bit choisi (IR0P4) identifiant si le cycle en cours nécessite une opération d'addition ou de soustraction, et à une paire choisie de bits (IRI0, 1) identifiant le forme de l'opérande du multiplicande pendant le cycle en cours.

3. Système de traitement de données selon la revendication 2, caractérisé en ce que l'autre moyen logique (27) produit une paire de bits d'extension (DSTX, DSTY).

4. Système de traitement de données selon la revendication 2 ou 3, caractérisé en ce que l'opération de multiplication utilise des opérandes à 32 bits pour produire un résultat de produit partiel pendant chaque cycle de multiplication, l'autre moyen logique produisant deux bits d'extension pour fournir un résultat à 34 bits.

5. Système de traitement de données selon la revendication 4, caractérisé en ce que le multiplicande peut avoir l'une des formes suivantes: ±0, ± le multiplicande, ou ± deux fois le multiplicande.

6. Système de traitement de données selon l'une des revendications 2 et 3, cractérisé en ce que l'opération de multiplication utilise des opérandes à 64 bits pour produire un résultat de produit partiel pendant chaque cycle de multiplication, l'autre moyen logique produisant deux bits d'extension pour fournir un résultant à 66 bits.

7. Système de traitement de données selon la revendication 1, caractérisé en ce que, pour réaliser les opérations de division, le réseau logique programmable agit en réponse, lors d'un cycle de calcul de division en cours, à un premier bit choisi (LINK) du résultat du cycle de calcul de division précédent et à un second bit choisi (TCRYY) identifiant si une opération d'addition ou de soustraction est requise pour le cycle de division en cours pour produire les bits d'extension, et en ce que l'autre moyen logique agit en réponse aux bits d'extension pour fournir un bit de quotient (CRYY) pendant le cycle de division en cours.

8. Système de traitement de données selon la revendication 7, caractérisé en ce que l'opération de division utilise des opérandes à 32 bits pour produire le bit de quotient pendant chaque cycle de division.

9. Système de traitement de données selon la revendication 8, caractérisé en ce que le premier bit choisi (LINK) est le bit le plus significatif du résultat du cycle de division précédent.

10. Système de traitement de données selon la revendication 7, caractérisé en ce que l'opération de division utilise des opérandes à 64 bits pour produire le bit de quotient pendant chaque cycle de division.

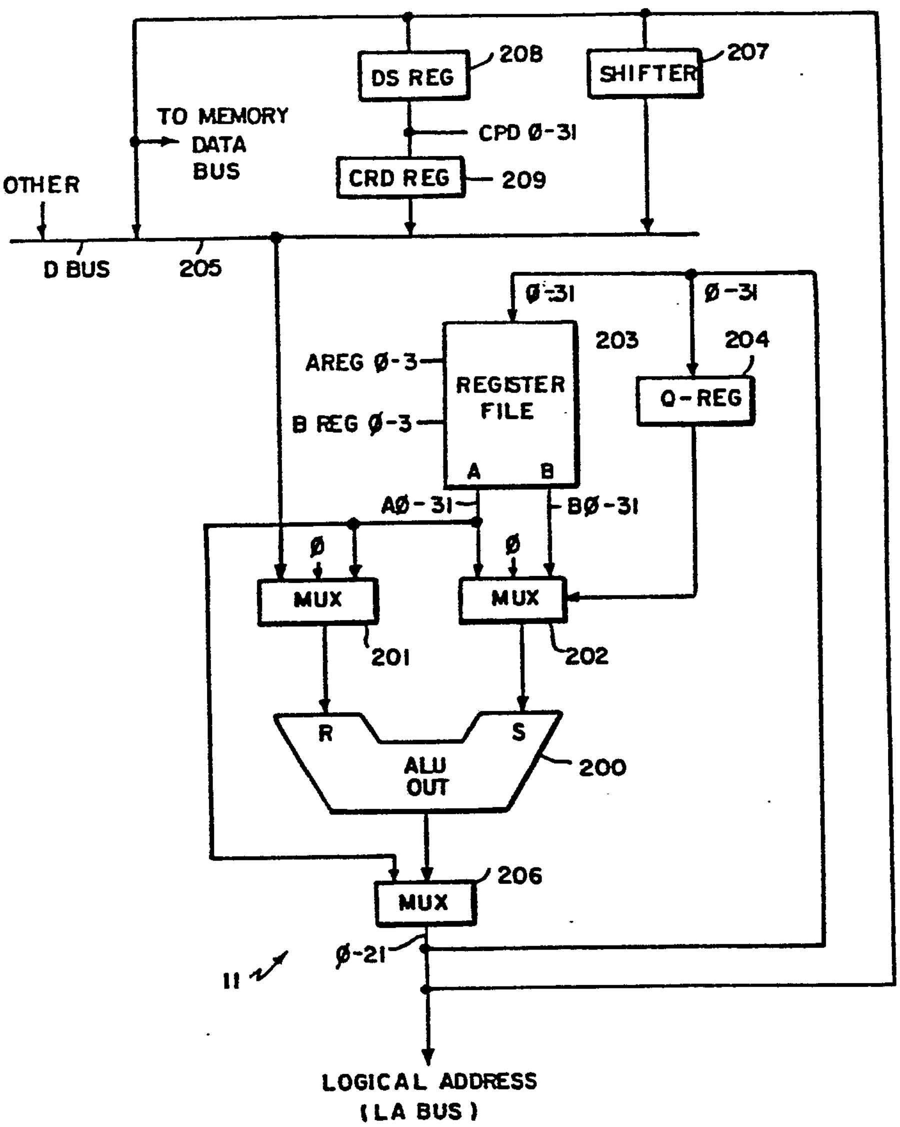
208
DS REG
SHIFTER
207
TO MEMORY DATA BUS
CPD Ø-31
OTHER
CRD REG
209
D BUS
205
Ø-31
Ø-31
203
204
AREG Ø-3
REGISTER FILE
Q-REG
B REG Ø-3
A
B
AØ-31
BØ-31
Ø
Ø
MUX
MUX
201
202
R
S
ALU OUT
200
206
MUX
Ø-21
11
LOGICAL ADDRESS (LA BUS)

FIG. I

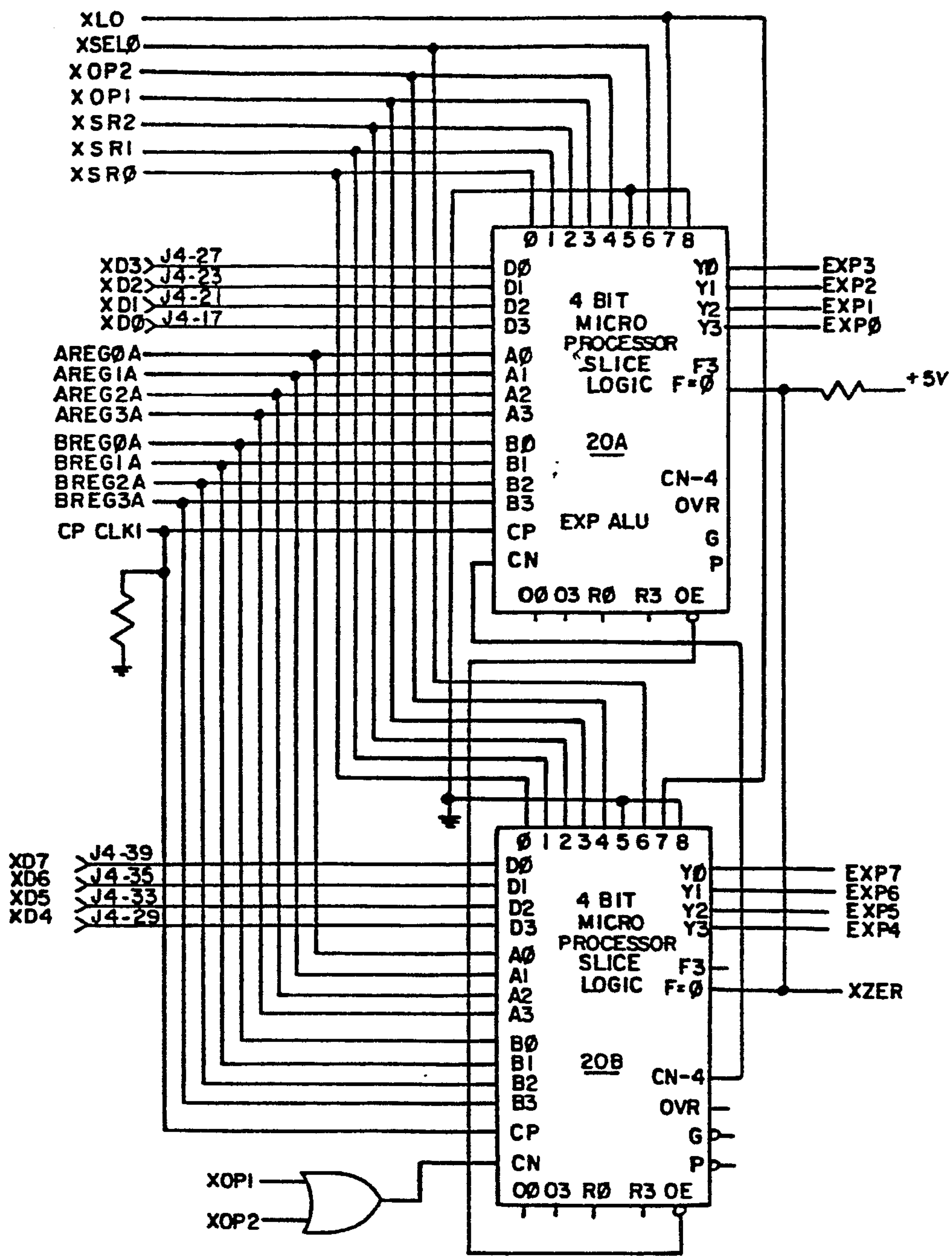
XLO
XSELØ
XOP2
XOPI
XSR2
XSRI
XSRØ
XD3 J4-27
XD2 J4-23
XDI J4-21
XDØ J4-17
AREGØA
AREGIA
AREG2A
AREG3A
BREGØA
BREGIA
BREG2A
BREG3A
CP CLKI
Ø 1 2 3 4 5 6 7 8
DØ DI D2 D3
AØ AI A2 A3
BØ BI B2 B3
CP
CN
4 BIT
MICRO
PROCESSOR
SLICE
LOGIC
20A
EXP ALU
YØ YI Y2 Y3
F3 F=Ø
CN-4
OVR
G
P
OØ O3 RØ R3 OE
EXP3
EXP2
EXPI
EXPØ
+5V
XD7 J4-39
XD6 J4-35
XD5 J4-33
XD4 J4-29
20B
XZER
EXP7
EXP6
EXP5
EXP4
XOPI
XOP2

FIG. 2

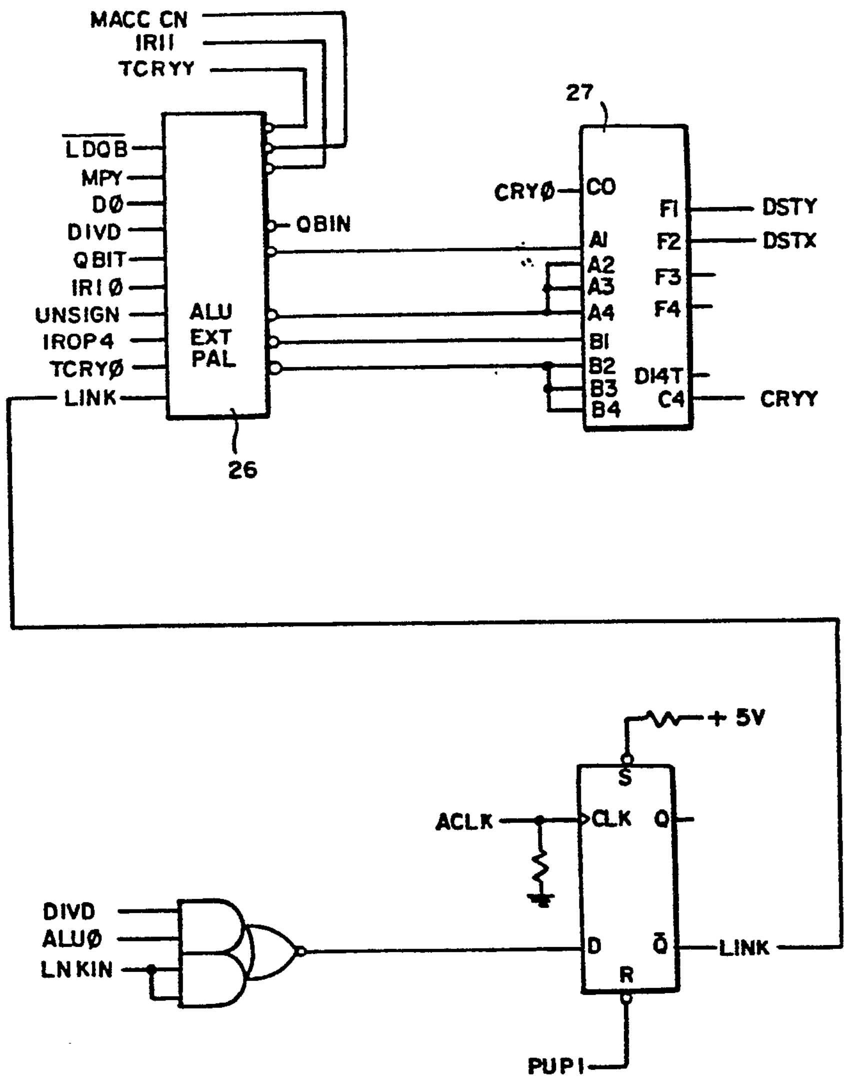
MACC CN
IRII
TCRYY
LDQB
MPY
DØ
DIVD
QBIT
IRIØ
UNSIGN
IROP4
TCRYØ
LINK
ALU
EXT
PAL
QBIN
26
27
CRYØ
CO
AI
A2
A3
A4
BI
B2
B3
B4
FI
F2
F3
F4
DI4T
C4
DSTY
DSTX
CRYY
+ 5V
S
ACLK
CLK
Q
D
Q̄
R
LINK
DIVD
ALUØ
LNKIN
PUPI

FIG.3